# EUROPEAN PATENT SPECIFICATION

(11) **EP 1 996 017 B1**
(45) Date of publication and mention of the grant of the patent: **05.06.2013**
(21) Application number: 07734005.7
(22) Date of filing: 17.03.2007
(51) Int. Cl.: A01N 25/34, A01N 59/16, A01P 1/00, C04B 41/48, B32B 27/00, B65D 75/36

(54) **ANTI MICROBIAL SHEET PRODUCTS AND PREPARATION PROCESS**
ANTIMIKROBIELLE FOLIENPRODUKTE UND HERSTELLUNGSVERFAHREN
PRODUITS ANTIMICROBIENS EN FORME DE FEUILLE ET PROCÉDÉ DE PRÉPARATION

(30) Priority: 17.03.2006 NL 1031398
(43) Date of publication of application: 03.12.2008
(73) Proprietor: Racquet, Marc, 2491 Olmen (BE)
(72) Inventor: Racquet, Marc, 2491 Olmen (BE)
(74) Representative: Quintelier, Claude
(86) International application number: PCT/IB2007/000667
(87) International publication number: WO 2007/107840

(56) References cited:
- WO-A-02/062577
- WO-A-2005/087855
- US-A1- 2003 021 903
- US-A1- 2005 129 929

## Description

The present invention refers to antimicrobial sheet material and products made there from such as tiles, more in particular tiles suitable for use in the sector of medical environments, building & construction sector, food industry, sanitary ware, recreation and agriculture.

Such sheets have been known for quite some time, and are in principle a valuable tool in fighting microbial contamination of floors, ceilings and walls of hospitals or kind like medical or health critical environments. The cost of the known sheet material is however relatively high, which has up to now impeded wide spread use thereof. It is therefore a main object of the present invention to arrive at an affordable cost level, such that adequate use of this solution may be made.

The latter aspect is all the more important given that, as provided by the president of the WHO on Jan. 20, 2005, "many drugs that are available against infections today are becoming less effective because of resistance.", and that increasingly patients "who enter a hospital for a simple procedure return home having an infection which is almost impossible to treat" (source www.whd.int).

In view of the object of the present invention to reduce the costs, but also increase the effectiveness of anti-microbial sheets, other applications become viable such as in construction, sanitary and food processing environment. In these areas, as a further idea underlying the present invention, anti-fungus functionality could be a desired functionality of tiles of sheet material, for which purpose somewhat increased concentrations are according to the invention appropriate. In this respect it was according to the invention also considered that outdoors applications may become viable should anti-moss functionality was also realised. As a further elaboration on the present invention it was found that such could indeed be realised by applying highest levels of concentration of the active ingredient

Known antimicrobial sheets come in various embodiments, such as a metallic sheet provided with an anti-microbial additive containing coating as is disclosed by patent document US2002185199. For ease of manufacture, handling and cutting, synthetic sheets are preferred.

Non-metallic, or synthetic anti-microbial sheet, at least tiles are known in the market in the form of polyethylene-UHMW (antimicrobial) sheet material, in which UHMW stands for ultra high molecular weight. These sheets are commonly manufactured using a moulding process such as an injection moulded sheet materials or tiles. However, also compression moulding and ram-extrusion are known. Such products are relatively expensive or relatively cumbersome to produce, and are according to an insight underlying the invention technically not always favourable, e.g. due to an anisotropic distribution of molecules, rendering crimp in all directions, which is undesired in view of a desired dimensional stability of the sheets.

The known products may all the more become expensive if relatively expensive, though highly effective, known per se, inorganic, in particular silver based antimicrobial agent or additive is used. Applying such type of agent ensures stable, i.e. long lasting activity, without the problem of migration as with more commonly applied organic antimicrobials.

Such anti-microbial sheeting using a silver based agent, and constructed with a base layer and two outer layers is generally know, e.g. from WP200508755. It is further also known, in general and in particular from patent publication US2003021903 to include glass material such as glass fibres in sheeting, for the purpose of enhancing mechanical strength thereof The present invention now seeks to provide such mechanically improved sheeting, e.g. for use in harsh environments such as hospitals, while maintaining the anti-mirrobial effectiveness of the sheeting, and while also retaining a cost-effective manufacture of such sheeting.

Given the cost issue of inorganic antimicrobial agents, the invention therefore is involved with providing economically favourably designed antimicrobial sheets or construction material based thereon.

Given the seriousness of the resistance problem at hospital bacteria, and the potential for further application of such an improved antimicrobial sheet, it is a further object of the invention to provide such, despite the elevated costs of inorganic agents, with even improved anti-microbial effectiveness.

Antimicrobial products according to the invention are therefore produced by means of an extrusion process known per se, in particular by means of a co-extrusion process also known per se, in which solely an outer layer of strongly reduced thickness is provided with such inorganic agent, and supported by and bonded to a base or body sheets of significantly larger thickness for providing stiffness to the antimicrobial active surface. Extruded sheet according to the invention can be in the form of compact or (partially) expanded extruded or co-extruded sheet.

The present invention thus provides an antimicrobial sheet and derived product like tile according to claim 1.

An extruded sheet according to the present invention is characterized by comprising at least two, preferably three co-extruded layers including a body or core layer sandwiched between two, or underlying one outer layer or layers. The body layer consists of thermoplastic, at least polymeric material. At least one of the outer layers comprises such polymeric material blended with the additive in pure, masterbatch or compounded form.

Anti-microbial sheet according to the invention thus comprises a body layer of a particular compound, and a co-extruded antimicrobial layer of significantly smaller thickness, at least predominantly composed of said compound and a known additive having anti-microbial functionality, in particular a silver-ion based additive.

As to the concerns raised on spreading germs that are pathogenic to humans, and fouling of construction & building materials by fungi and algae, it is observe that the market is already seeking solutions contribute to better hygiene and help to prevent cross-contamination by these germs (e.g. MRSA, Salmonella, Legionella, E. Coli, A. Niger). The known solution to this problem works by inhibiting the multiplication of microbes thus reducing their population. The superior performance of anti-microbial sheets against the MRSA strain has meant that this product is becoming increasingly popular in medical applications. In particular with the present invention, at relatively low doses the antimicrobial shows a dramatic reduction (99.5-99.93% in 24 hrs) in bacteria, fungi and algae on plastic substrates. As will further be explained in detail, given the cost reductions realised thereby, the increased stability over time and the increased effectiveness thereof, an extruded sheet in accordance with the present invention can meet the growing need for bacteriologic safe environments in at least the medical sphere.

In the new design according to the invention of such sheets, the above mentioned compositions may contain other additives such as an antioxidant, process aid, pigment, antistatic agent, plasticizing agent, fillers, lubricant, dispersants, flavourings, appetizers, medications, foaming agent, micro- and nano-spheres with controlled-release active ingredients, nucleating agents, cross-linking agents etc.

According to the invention the additives are incorporated in the compositions of one or more of the outer layers, in particular the silver based antimicrobial agent. In this manner the effectiveness of the anti-microbial additive may be increased by increasing the concentration thereof in the composition of an outer layer, while costs of manufacture and of product are not unduly raised, despite the use of relatively expensive co-extrusion tools, and - given the reduced active layer thickness - despite said increased concentration.

It is a merit of the present invention to have realised that using more expensive manufacturing tools may be compensated by applying the relatively expensive additives in merely small layers with relatively high additive concentration. Using co-extrusion thereby, renders a possibility of continuous cutting of sheet parts. Additionally undesired effect of crimp is here limited to directional crimp only.

In case of partially expanded extruded sheet according to the invention, the expansion is performed by means of the foaming agent in the mixture. The foaming agent is preferably delivered to a part of the extruder where the original mixture is in a molten state. The base components for the mixture can be delivered to an extruder as is, or in the form of previously extruded or palletized granules.

After extrusion, the extruded sheet, either in the form of partially expanded or compact extruded sheet, can be processed immediately to manufacture the end products or it can be stocked for subsequent manufacturing. The sheet can be converted into the end product using suitable mechanized means, or by hand.

In addition to the preceding, by the development work performed to achieve the desired hospital sheeting, and the resulting favourable new sheet and its manufacturing process, it has become clear that other products such as e.g. sheet for sound walls along roads may also favourably attained provided the additive concentration is raised up to at least 0,3%, thereby counteracting even moss development. Such tiles are against other type of materials favourable since they are durable, transparent and not susceptible to growth of moss and fungi, and generally at least much less as in the case of transparent glass. Sound wall according to the invention moreover favourably provide a sound reduction within the range of 25 to 35 dB.

De invention will now be elucidated further by way of example along a drawing in which:
Figure 1 is a schematic representation of a sectional view of a prior art anti-microbial sheet;
Figure 2 in a corresponding view illustrates an antimicrobial sheet according to the invention;
Figure 3 is a schematic representation of a manufacturing tool utilised for realising sheets according to the invention.

In de figures corresponding structural parts or functions are referred to by identical reference signs.

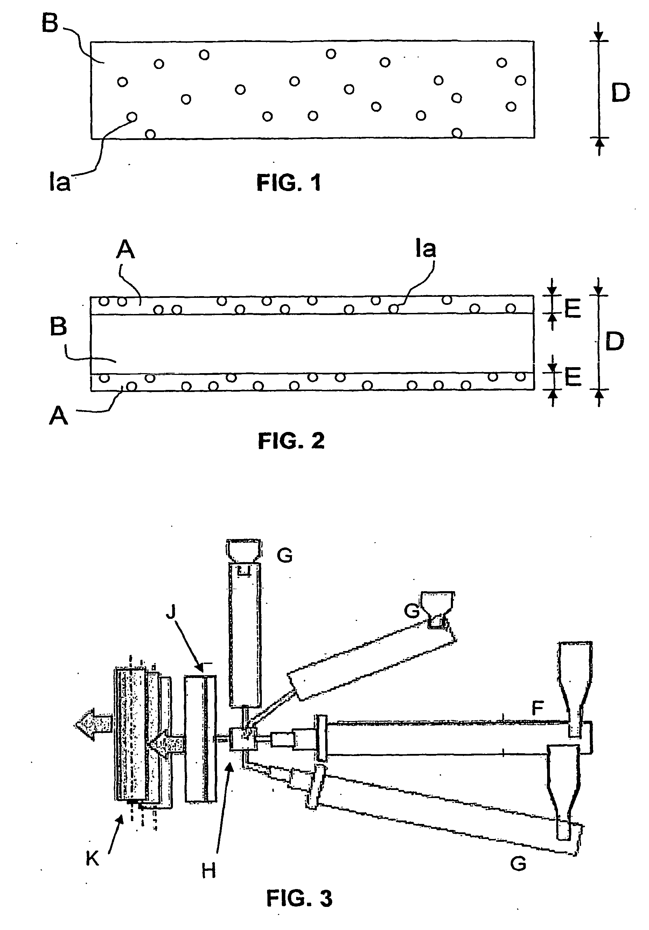

Figure 1 is a sectional view of an anti-microbial sheet according to the prior art, showing a single layer B of a polymeric material having a composition with a base material and an anti-microbial additive Ia. The sheet is typically formed by moulding, e.g. compression moulding, RAM-extrusion, however, also even more expensive processes like injection moulding is used.

Figure 2 shows the anti-microbial sheet according to the invention comprising a body layer or support B, preferably of a thermoplastic material, and two covering layers A of considerably smaller thickness, sandwiching the support layer B. The material cover layer is of a composition corresponding to that of the support B. In the new sheet design, unlike the body layer B, the cover layers A are provided with anti-microbial material, in casu a silver-ion based additive.

With the new design the concentration of the antimicrobial material may be increased without undue costs, given an insight underlying the invention that only a minimal, i.e. surface layer of said anti-microbial material is required for prohibiting bacteria and the like from growth. Thus, where the support layer B may be within a range of 1 to 25 mm of thickness D, the covering or active layer A will only be of a thickness E within a range from 25 to 100 µm (micro-meter). The concentration of additives la in a covering layer A is increased from an order in the lower end of a possible range of concentrations as in the known sheet design, towards an order in the higher end of such range. Typically such concentration, i.e. in a cover layer A, may be within the range from 0,1 to 5% of active ingredient by weight, with a preferred range running from 0,1% to 0,6%. Where bacteria are in fact already killed at a concentration of 0,2%, in practice a concentration of 0,3 is applied, a.o. so as not to be surprised by possibly locally varying concentrations. A comparable margin is applied at concentrations for combating moss and fungi where according to research 0,5% suffices, however where in practice preferably 0,6% is applied.

In case of antibacterial sheeting, which may include blister packages, thickness D of a range starting at 0,5 mm may be applied. Antibacterial sheeting for medical rooms and apparatuses, and sanitary applications will in thickness D typically be in a range from 2 mm to 5 mm, while e.g. sound wall or sound barrier sheeting will typically be within the range from 15 to 35 mm, in particular around 25 mm (+/ 10%). It is remarked however, that under the invention thicknesses may in principle also be applied up to e.g. an extraordinary thickness of 200 mm.

It is a further insight according to the invention that such improved antimicrobial effectiveness of the new design allows for higher pricing of the product and thereby, opens an option towards relatively expensive, though sometimes more versatile manners of manufacturing than with the known sheet design.

In accordance with the invention a relatively costly process is applied for realising the new sheet design, knowing that apart from the improved effectiveness of the new design, the significantly reduced thickness of the antimicrobial active layer, despite of an increased concentration of the antimicrobial additive therein, implies a significant reduction in use of the antimicrobial additive. Such active ingredient, blended with a polymeric carrier is provided by the industry as so-called masterbatches, and are relatively expensive, all the more so in the case of silver-ions.

Since such additives, supplied by the industry as so-called masterbatches, are relatively highly expensive, even more so in the case of silver-ion based masterbatches, an overall cost reduction is effected by the new sheet design.

As a further feature of improvement of the sheet material according to the invention, the sheet design is improved by including glass flakes in the composition of the support layer material, thereby improving mechanical properties of the sheet and adding a flame retarding feature to the new sheet, which is of particular importance in public environments. According to the invention such glass flakes are solely included in the support layer, preferably in a concentration of 5 to 15%, in particular 5 to 8%, so as not in any manner hamper the functionality of the anti-microbial additive, e.g. through the presence of glass flakes at the surface, locally preventing the additive from contacting bacteria, fungi and/or moss. In a for public environments preferred embodiment, the support layer is provided with both a flame retardant agent and said glass flakes, thereby providing a synergetic effect on the aspect of flame retarding.

Figure 3 schematically illustrates an extrusion process, in particular a screw-extrusion process as applied in accordance with the invention for manufacturing the new sheet design. With such process one or both of the covering layers may be co-extruded, while at the same time a virtually continuous manufacturing process is designed given that the exiting, co-extruded sheet may during such exiting immediately be cut into sheets, either for direct application, or for further processing. This new way of manufacturing, enabled by the new design, further enables cost reduction of anti-microbial sheets, promoting its use in medical and even industrial or domestic environments.

In figure 3, material supported to main extruder F and co-extruders G remain separate throughout the apparatus, including in adaptor H and in die J where the extruded material exits and forms a layered sheet K as desired by the present invention. In the above examples only one or 2 as the case may be, of the three co-extruders G are applied. Further co-extruders G may be present and may be applied for providing an additional layer between the support B and a cover layer A comprising said active ingredient, without compromising the present invention.

Co extrusion equipment is per se well known in the plastics industry, e.g. by the co-extrusion systems from Dr. Collin GmbH. Such equipment may comprise one extruder for each plastics composition employed and is adapted to feed a co extrusion die fitted e.g. with appropriate flow distribution control or to feed a conventional die via an appropriate distributor block.

With the co-extrusion process masterbatches can favourably easily be added to a base material, without e.g. advance mixing or expensive administration systems. Also, glass flakes may be added in a corresponding manner, favourable solely to the support layer A, while still without undue costs thereof, a very good mixture with the base material is achieved, due to the type of manufacturing process.

According to the invention glass flakes are used, in fact glass powder rather than glass fibres as is often applied. With such application of glass particles the mechanical properties improving effect is maintained, however with improved effect on transparency. The latter is of particular interest for shielding in public environment, in particular health care, where displays require both mechanical robustness and a microbial resistant effect. With the present embodiment, covering panes for displays are realised in accordance with the present invention, with improved transparency, while meeting such modem demands. Rather than within the range of millimetres as with glass flakes, dimension of such glass powder is in the order of nanometers (nm). A group of glass particles within the range of thickness of 100 to 6000 nm and a nominal particle size, i.e. length distribution in the order of tens of micrometers, e.g. 20 to 60 µm is regarded as of particular interest.

Even more to the latter, it was also discovered that combining glass material, in particular glass powder, with a flame retardant may lead to economise on the amount of glass material applied, thus even further improving transparency of applications, while maintaining both fire resting and mechanical properties. Rather than the above mentioned range of 5 to 8%, values of below 5% are in such cases applied, e.g. within the range of 3 to 5%.

Yet a further development consists of employing dichloro 2-n-octyl-4-isothiazolin-3-one, or DCOIT for short is applied in the principle according to the invention in a concentration of less than 5%, or less than 2% for in-house applications. The product may in particular be combined with any of the preceding materials.

In general, and in particular in sound wall applications where PMMA, i.e. poly methyl metha acryl ate is applied, one of if not the worst fire resistant materials, in fact a very good burning material, the present invention teaches to apply a halogen free flame retardant Where it is normally not found that any flame retardant has an improving effect on this material, it was found that halogen free flame retardant does have an improving effect. Positive results were in particular obtained with flame retardant K0160 of Kafrit Industries in Israel, which is poly carbonate based and well compatible with acrylate.

Since however none acrylate applications, or with none poly carbonate based flame retarders, incompatibility of combined materials may lead to deterioration of mechanical properties, the invention combines the application of this retardant with above said glass material, in particular said glass powder for compensating such deterioration, in particular without adverse effect on transparency of such sound walls. Alternatively and additionally the present invention teaches to apply a compatibiliser for bonding the acrylic phase and the polycarbonate phase.

## Claims

1. Anti-microbial sheet and derived product like tile, comprising a polymeric base material and an anti-microbial additive, wherein the additive comprises at least one additive of an inorganic nature, in particular silver based, and wherein the base material is comprised in a support layer or body, supporting at least one cover layer of significantly lower thickness as compared to the support, the cover layer being of a composition comprising said support material and said inorganic microbial additive, wherein the composition of the material of the support comprises glass flakes, wherein the glass flakes are added solely to the support layer, and wherein the glass flakes are of a magnitude within the range of thickness of 100 to 6000 nm, wherein the nominal size of the glass flakes lies within the range of 20 to 60 µm, in particular is about 40 µm, and wherein the glass flakes are applied to the sheet in combination with a flame retardant agent.

2. Sheet according to the preceding claim, in which said glass flakes are added in said support layer in a concentration comprised within a range of 5 to 15 %.

3. Sheet according to any of the preceding claims, in which the anti-microbial additive comprises dichloro 2-n-octyl-4-isothiazolin-3-one.

4. Sheet according to any of the preceding claims, in which said sheet is manufactured by co-extrusion.

5. Sheet according to any of the preceding claims, in which said cover layer has a thickness comprised within a range of 25 to 100 µm, said support preferably being of a thickness within a range of 0,5 to 35 mm.

6. Sheet according to any of the preceding claims, in which said anti-microbial additive has a concentration within a range of 0,1 to 5 % of active ingredient in said anti-microbial layer by weight.

7. Sheet according to any of the preceding claims, in which said anti-microbial additive has a concentration comprised in a range of 0,1 to 0,6 % of active ingredient by weight.

8. Sheet according to any of the preceding claims, in which the anti-microbial additive comprises silver-ions.

9. Sheet according to any of the preceding claims, in which the anti-microbial additive comprises a combination of silver ions and dichloro 2-n-octyl-4-isothiazolin-3-one.

## Patentansprüche

1. Antimikrobielle Folie und davon abgeleitetes Produkt, wie eine Fliese, umfassend ein polymeres Grundmaterial und einen antimikrobiellen Zusatzstoff, wobei der Zusatzstoff mindestens einen Zusatzstoff anorganischer Art, insbesondere auf Silberbasis umfasst, und wobei das Grundmaterial in einer Trägerschicht oder einem Trägerkörper enthalten ist, die bzw. der mindestens eine Deckschicht signifikant geringerer Dicke im Vergleich zum Träger trägt, wobei die Deckschicht eines Zusammensetzung ist, die das Trägermaterial und den anorganischen mikrobiellen Zusatzstoff umfasst, wobei die Zusammensetzung des Trägermaterials Glasflocken umfasst, wobei die Glasflocken eine Größe im Dickenbereich von 100 bis 6000 nm aufweisen, wobei die Nenngröße der Glasflocken im Bereich von 20 bis 60 µm liegt, insbesondere etwa 40 µm, und wobei die Glasflocken in Kombination mit einem flammhemmenden Mittel auf die Folie aufgetragen werden und wobei die Glasflocken nur der Trägerschicht zugegeben werden.

2. Folie nach dem vorangehenden Anspruch, wobei genannte Glasflocken an die genannte Trägerschicht zugefügt werden in einer Konzentration welche im Bereich von 5 bis 15 % liegt.

3. Folie nach einem der vorangehenden Ansprüche, wobei der antimikrobielle Zusatzstoff Dichlor-2-n-octyl-4-isothiazolin-3-on umfasst.

4. Folie nach einem der vorangehenden Ansprüche, wobei die Folie durch Co-Extrusion hergestellt wird.

5. Folie nach einem der vorangehenden Ansprüche, wobei genannte Deckschicht eine Dicke hat die im Bereich von 25 bis 100 µm liegt, wobei der Träger vorzugsweise eine Dicke im Bereich von 0,5 bis 35 mm aufweist.

6. Folie nach einem der vorangehenden Ansprüche, wobei genannter antimikrobielle Zusatzstoff eine Konzentration aufweist im Bereich von 0,1 bis 5%, auf das Gewicht bezogen, eines Wirkstoffs in der antimikrobiellen Schicht.

7. Folie nach einem der vorangehenden Ansprüche, wobei genannter anitmikrobielle Zusatzstoff eine Konzentration im Bereich von 0,1 bis 0,6 % auf das Gewicht bezogen eines Wirkstoffs aufweist.

8. Folie nach einem der vorangehenden Ansprüche, wobei der antimikrobielle Zusatzstoff Silberionen umfasst.

9. Folie nach einem der vorangehenden Ansprüche, wobei der antimikrobielle Zusatzstoff eine Kombination aus Silberionen und Dichlor-2-n-octyl-4-isothiazolin-3-on umfasst.

## Revendications

1. Feuille antimicrobienne et produits dérivés comme une tuile, comprenant un matériau de base polymérique et un additif antimicrobien, dans lequel ledit additif comprend au moins un additif de nature inorganique, en particulier à base d'argent, et dans lequel ledit matériau de base est compris dans une couche support ou dans un corps, supportant au moins une couche de couverture d'une épaisseur significativement plus faible par rapport au support, ladite couche de couverture étant une composition comprenant ledit matériau de support et ledit additif microbien inorganique, dans lequel ladite composition du matériau de support comprend des paillettes de verre, dans lequel lesdites paillettes de verre sont ajoutées uniquement à la couche support et, dans lequel lesdites paillettes de verre sont d'une grandeur comprise dans la plage d'épaisseur située entre 100 et 6000 nm, dans lequel le diamètre nominal desdites paillettes de verre est compris dans la plage située entre 20 et 60 µm, en particulier environ 40 µm, et dans lequel lesdites paillettes de verres sont appliquées à ladite feuille en combinaison avec un agent retardateur de flammes.

2. Feuille selon la revendication précédente, dans laquelle lesdites paillettes de verre sont ajoutées dans ladite couche support dans une concentration comprise entre 5 et 15 %.

3. Feuille selon l'une quelconque des revendications précédentes, dans laquelle ledit additif antimicrobien comprend du dichloro 2-n-octyl-4-isothiazolin-3-one.

4. Feuille selon l'une quelconque des revendications précédentes, dans laquelle ladite feuille est fabriquée par co-extrusion.

5. Feuille selon l'une quelconque des revendications précédentes, dans laquelle ladite couche de couverture présente une épaisseur comprise entre 25 et 100 µm, ledit support étant préférentiellement d'une épaisseur comprise entre 0,5 et 35 mm.

6. Feuille selon l'une quelconque des revendications précédentes, dans laquelle ledit additif antimicrobien présente une concentration comprise dans la plage située entre 0,1 et 5 % en poids d'ingrédient actif dans ladite couche antimicrobienne.

7. Feuille selon l'une quelconque des revendications précédentes, dans laquelle ledit additif antimicrobien présente une concentration comprise entre 0,1 et 0,6 % d'ingrédient actif en poids.

8. Feuille selon l'une quelconque des revendications précédentes, dans laquelle l'additif antimicrobien comprend des ions d'argent.

9. Feuille selon l'une quelconque des revendications précédentes, dans laquelle l'additif antimicrobien comprend une combinaison d'ions d'argent and du dichloro 2-n-octyl-4-isothiazolin-3-one.
